# EUROPÄISCHE PATENTSCHRIFT

(11) **EP 0 916 231 B1**
(45) Veröffentlichungstag und Bekanntmachung des Hinweises auf die Patenterteilung: **13.02.2002**
(21) Anmeldenummer: 97935431.3
(22) Anmeldetag: 16.07.1997
(51) Int. Cl.: H04Q 11/04

(54) **VERFAHREN ZUR OPTIMIERUNG DER AUSLASTUNG VON VERBINDUNGSABSCHNITTEN IN SYSTEMEN, IN DENEN INFORMATIONEN IN DATENPAKETEN ÜBERTRAGEN WERDEN**
PROCESS FOR OPTIMISING LOAD DISTRIBUTION BETWEEN CONNECTION SECTIONS OF DATA PACKAGE TRANSMISSION SYSTEMS
PROCEDE D'OPTIMISATION DE LA CHARGE DE TRAVAIL DE SEGMENTS DE CONNEXION DANS DES SYSTEMES, DANS LESQUELS DES INFORMATIONS SONT TRANSMISES SOUS FORME DE PAQUETS DE DONNEES

(30) Priorität: 31.07.1996 DE 19630919
(43) Veröffentlichungstag der Anmeldung: 19.05.1999
(73) Patentinhaber: SIEMENS AKTIENGESELLSCHAFT, 80333 München (DE)
(72) Erfinder: BRIEM, Uwe, D-82216 Maisach (DE)
(86) Internationale Anmeldenummer: DE9701501
(87) Internationale Veröffentlichungsnummer: WO9806231

(56) Entgegenhaltungen:
- EP-A- 0 705 007
- J. W. ROBERTS: "Virtual spacing for flexible traffic control" INTERNATIONAL JOURNAL OF COMMUNICATION SYSTEMS, Bd. 7, 1994, CHICHESTER, Seiten 307-318, XP002043924 in der Anmeldung erwähnt
- PARK K: "SELF-ORGANIZED MULTI-CLASS QOS PROVISION FOR ABR TRAFFIC IN ATM NETWORKS" PROCEEDINGS OF THE 1996 IEEE FIFTEENTH ANNUAL INTERNATIONAL PHOENIX CONFERENCE ON COMPUTERS AND COMMUNICATIONS, SCOTTSDALE, MAR. 27 - 29, 1996, Nr. CONF. 15, 27.März 1996, INSTITUTE OF ELECTRICAL AND ELECTRONICS ENGINEERS, Seiten 446-453, XP000594811

## Beschreibung

Verfahren zur Optimierung der Auslastung von Verbindungsabschnitten in Systemen, in denen Informationen in Datenpaketen übertragen werden.

Die Erfindung betrifft ein Verfahren gemäß dem Oberbegriff des Patentanspruchs 1.

Bei zeitgemäßen Paketvermittlungsystemen werden Informationen in Datenpaketen übertragen. Als Beispiel hierfür seien ATM-Zellen genannt. Diese weisen einen Kopfteil sowie einen Informationsteil auf. Im Kopfteil sind Verbindungsinformationen und im Informationsteil die zu übertragenden Nutzdaten abgespeichert. Die eigentliche Übertragung erfolgt in der Regel über Verbindungsabschnitte zwischen Sender und Empfänger. Dabei besteht gegebenenfalls das Erfordernis, die Verbindungsabschnitte derart auszunutzen, daß eine Mehrzahl von Sendeeinrichtungen die von diesen ausgehenden Zellenströme über denselben Verbindungsabschnitt übertragen.

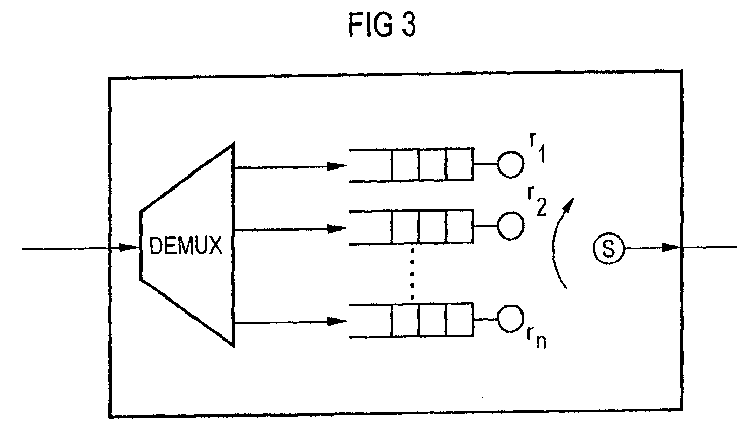

Um die Übertragung der jeweiligen Zellenströme entsprechend den Erfordernissen der einzelnen Zellenströme durchführen zu können, hat sich beim Stand der Technik ein sogenanntes WEIGHTED FAIR QUEUEING SCHEDULING - Verfahren durchgesetzt. Die entsprechenden Verhältnisse sind beispielsweise in der Druckschrift "Virtual Spacing for Flexible Traffic Control", J.W. Roberts, International Journal of Communication Systems, Vol. 7, 307-318 (1994) aufgezeigt. Dabei werden den einzelnen Zellenströmen unterschiedliche Gewichtungsfaktoren zugewiesen, mit denen der eigentliche Übertragungsvorgang auf den einzelnen Verbindungsabschnitten gesteuert wird. Zum besseren Verständnis sei auf Figur 3 verwiesen.

Dort sind beispielhaft Zellenströme 1 ... n offenbart. Die n Zellenströme werden von einer Sendeeinrichtung DEMUX in Richtung eines oder mehrerer Empfänger geleitet. In der Praxis wird dabei lediglich ein gemeinsamer Verbindungsabschnitt benutzt. Den n Zellenströmen sind weiterhin Gewichtungsfaktoren r₁ ... rₙ zugewiesen. Zum einfachen Verständnis sei angenommen, daß lediglich zwei Zellenströme, nämlich die Zellenströme 1, 2 über ein Verbindungsabschnitt geführt werden sollen. Der Verbindungsabschnitt soll weiterhin eine maximale Übertragungskapazität von 150 Mbit/sec aufweisen. Beiden Zellenströmen 1 und 2 sind Gewichtungen r₁ = 2 sowie r₂ = 1 zugewiesen. Damit wird erreicht, daß Zellenstrom 1 mit einer Übertragungsrate von 100 Mbit/sec und Zellenstrom 2 mit lediglich 50 Mbit/sec übertragen wird, falls für beide Zellenströme Zellen zur Übertragung anstehen. Falls lediglich einer der beiden Zellenströme Zellen zu übertragen hat, wird diesem Zellenstrom die gesamte Übertragungskapazität von 150 Mbit/s zugewiesen.

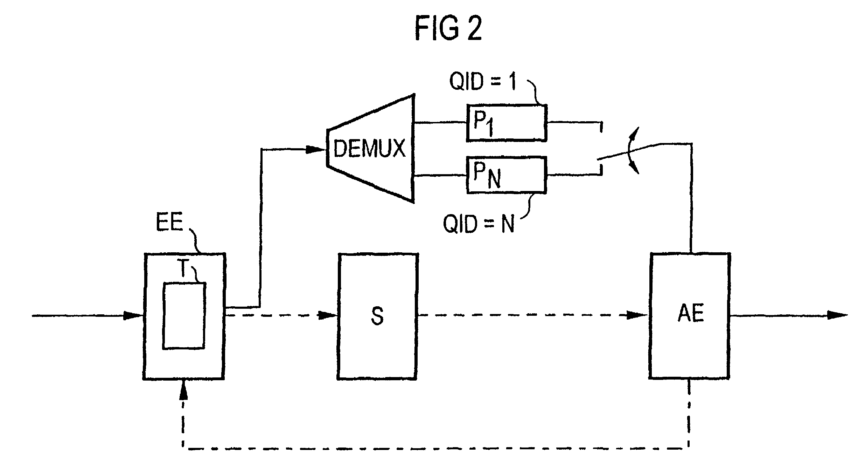

In Figur 2 ist offenbart, wie die soeben angesprochenen theoretischen Überlegungen beim Stand der Technik in die Praxis übertragen werden. Danach wird aufgezeigt, wie Datenpakete bzw. ATM-Zellen mit dem Weighted Fair Queueing Scheduling Algorithmus behandelt werden. Dabei werden ankommenden Zellen der Eingangseinrichtung EE zugeführt, an die Demultiplexeinrichtung DEMUX weitergeleitet und dort mit Hilfe einer hier implementierten Demultiplexfunktion unter zu Hilfenahme einer Warteschlangenkennung QID in eine logische Warteschlange gespeichert. Die Warteschlangenkennung QID ist dabei im Zellenkopf einer jeden Zelle enthalten.

Zeitgleich hierzu werden in der Eingangseinrichtung EE ermittelte Steuerdaten einer Schedulereinrichtung S zugeführt. Hier läuft ein an sich bekannter Scheduling Algorithmus ab.

Dies kann beispielsweise der Weighted Fair Queueing Scheduling Algorithmus oder ein beliebiger sonstiger Algorithmus sein. Dieser Algorithmus bestimmt beispielsweise, in welcher Reihenfolge oder zu welchem Zeitpunkt die in den Pufferspeichern P1...Pn gespeicherten Zellen ausgelesen werden sollen (Vorplanung). Das Ergebnis der Bewertung der Steuerdaten durch diesen Algorithmus wird der Ausgangseinrichtung AE zugeführt. Die in den Pufferspeichern P1...Pn gespeicherten Zellen werden nun auf Basis des Ergebnisses der Bewertung durch den in der Schedulingeinrichtung S ablaufenden Algorithmuses ausgelesen. Weiterhin wird ein Quittungssignal auf die Eingangseinrichtung EE zurückgekoppelt. Danach und bei Ankunft einer neuen Zelle in der Eingangseinrichtung EE mit einer Warteschlangenkennung QID und bei Rückmeldung 'gewählte QID' wird von der Eingangseinrichtung EE in Abhängigkeit vom Pufferfüllstand für QID = i sowie dem Scheduling-Verfahren entschieden, ob die Meldung "SCHEDULE QID" generiert wird. Diese Meldung zeigt der Schedulereinrichtung S an, daß diese für diese Warteschlangenkennung QID den nächsten Übertragungszeitpunkt in irgendeiner Weise vorplanen soll.

Problematisch an einer derartigen Vorgehensweise ist, daß der Weighted Fair Queueing Scheduling Algorithmus zwar minimale Zellenraten garantiert, daß aber eine maximale Zellenratenbegrenzung hier nicht durchgeführt werden kann. Dies ist aber insofern wesentlich, da in der Praxis oft - zum Beispiel bei ABR-Verkehr (Available Bit Rate) - sowohl minimale als auch maximale Zellraten eingehalten werden müssen.

In der europäischen Patentanmeldung EP 0 705 007 A2 ist ein Verfahren zur Garantie von maximalen und minimalen Zellraten beschrieben. Das Schedulen der Zellen erfolgt dabei auf Zellbasis, wobei zuerst ein Scheduler zur Sicherung der Mindestzellrate und dann ein Scheduler zur Begrenzung der Spitzenzellrate eingesetzt wird.

Der Erfindung liegt die Aufgabe zugrunde, einen Weg aufzuzeigen, wie der Weighted Fair Queueing Scheduling Algorithmus derart modifiziert werden kann, daß auch hier eine optimierte Übertragung sichergestellt ist.

Die Aufgabe wird ausgehend von den im Oberbegriff des Patentanspruch 1 angegebenen Merkmalen durch die Merkmale des kennzeichnenden Teiles gelöst.

Vorteilhaft an der Erfindung ist, daß nach Maßgabe einer im Paketkopf enthaltenen Warteschlangenkennung gegebenenfalls dem auf einer Schedulereinrichtung ablaufenden Schedulingverfahren ein auf einer weiteren Schedulereinrichtung ablaufendes weiteres Schedulingverfahren vorangestellt wird, mittels dem eine Begrenzung der Verbindungsparameter, die für obere Übertragungsraten der Datenpakete repräsentativ sind, während des Übertragunsvorgangs durchgeführt wird, wobei die Schedulereinrichtung gegebenenfalls mehrmals und die weitere Schedulereinrichtung lediglich einmal vorgesehen wird. Dabei wird das Ergebnis der ersten Stufe als Eingangssignal für die zweite Stufe genommen. Damit wird insbesondere erreicht, daß sowohl eine untere als auch eine obere Begrenzung der Zellenrate steuerbar ist, d.h. daß die Zellen während des Übertragungsvorganges nicht mit höheren Zellenraten übertragen werden. Insbesondere ist dieses Verfahren nicht auf die Verwendung eines bestimmten Algorithmus beschränkt. Weiterhin sei noch darauf hingewiesen, daß zwei Schedulereinrichtungen vorgesehen sind, wobei die erste dieser Schedulereinrichtungen lediglich einmal und die verbleibende der Schedulereinrichtungen vorteilhaft gegebenenfalls mehrmals vorgesehen ist.

Weitere Ausgestaltungen der Erfindung sind in den Unteransprüchen vorgesehen.

Gemäß Anspruch 2 ist vorgesehen, daß das Schedulingverfahren ein Weighted Fair Queing Scheduling Algorithmus ist. Damit ist der Vorteil verbunden, daß auf ein bewährtes Verfahren zurückgegriffen werden kann. Weiterhin ist hieran vorteilhaft, daß eine untere Begrenzung der Zellenrate durch diesen Algorithmus garantiert wird.

Gemäß Anspruch 3 ist vorgesehen, daß in einer Eingangseinrichtung eine Tabelle geführt wird, in der aktuelle Füllstände von Pufferspeichern enthalten sind. Damit ist der Vorteil verbunden, daß jederzeit ein aktuelles Abbild dieser Füllstände hier gespeichert ist.

Gemäß Anspruch 4 ist vorgesehen, daß nach Maßgabe von von der Schedulereinrichtung erhaltenen Steuerdaten die Ausgangseinrichtung Zellen wenigstens einem der Pufferspeicher entnimmt und diesen Vorgang der Eingangseinrichtung quittiert. Durch die Rückkoppelung hat der Auslesevorgang unmittelbaren Einfluß auf die erste Stufe des zweistufigen Verfahrens. Die beiden Stufen des zweistufigen Schedulingverfahrens arbeiten somit nicht unabhängig voneinander. Die Arbeitsweise der ersten Stufe wird von der Arbeitsweise der zweiten Stufe beeinflußt. Als Rückkopplungsparameter können beispielsweise die Warteschlangenkennung oder die Paketlänge verwendet werden.

Gemäß Anspruch 5 ist vorgesehen, daß die Warteschlangenkennung während des Verbindungsaufbaus eingetragen wird.

Gemäß Anspruch 6 ist vorgesehen, daß die Datenpakete ATM - Zellen sind. Damit kann die Erfindung insbesondere für ATM-Netze Anwendung finden.

Die Erfindung wird im folgenden anhand eines Ausführungsbeispiels näher erläutert.

Es zeigen:
- Figur 1: das erfindungsgemäße Verfahren
- Figur 2: die praktische Anwendung des Standes der Technik
- Figur 3: theoretische Überlegungen bezgl. des Standes der Technik

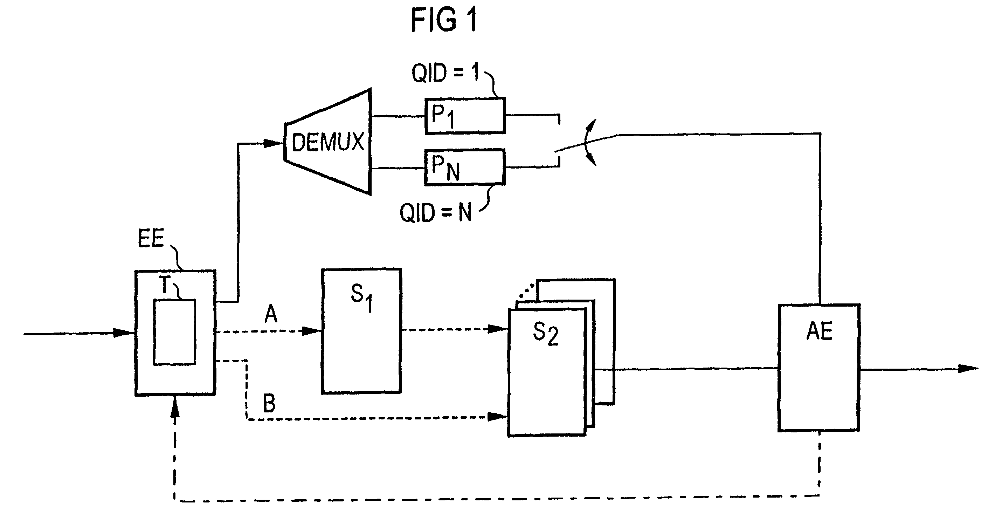

In Figur 1 ist das erfindungsgemäße Verfahren aufgezeigt. Dabei wird davon ausgegangen, daß die Informationen nach einem asynchronen Transfermodus (ATM) in ATM-Zellen übertragen werden.

Die Zellen werden der Eingangseinrichtung EE in einem Zellenstrom zugeführt. Im Kopfteil einer jeden Zelle ist die Wegeinformation abgespeichert. Weiterhin ist hier im Zuge des Verbindungsaufbaus eine Warteschlangenkennung QID abgelegt worden. Diese Warteschlangenkennung ist eine Zellenstromkennung, die verbindungsindividuell oder für ein Bündel von Verbindungen im Zellenkopf eingetragen wird. Der Warteschlangenkennung QID werden in der Regel einfache Zahlenwerte zugewiesen. In vorliegendem Ausführungsbeispiel soll die Warteschlangenkennung QID die Werte 1...N aufweisen. Die Zellen selbst werden ausgehend von der Eingangseinrichtung EE der Demultiplexeinrichtung DEMUX zugeführt und dort mit Hilfe einer hier implementierten Demultiplexfunktion unter Zuhilfe nahme der Warteschlangenkennung QID in als logische Warteschlangen ausgebildete Pufferspeicher P1...Pn eingeschrieben.

In der Eingangseinrichtung EE ist weiterhin in einer Tabelle T abgelegt, welche der Verbindungen eine Begrenzung der Verbindungsparameter während des Übertragungsvorganges benötigen. In vorliegendem Ausführungsbeispiel wird davon ausgegangen, daß im Sinne der Begrenzung von Verbindungsparametern eine Begrenzung der Zellenrate gesteuert wird. Um die Verbindung zu verifizieren, wird jeder der ankommenden Zellen die Warteschlangenkennung QID entnommen und mit den Einträgen der Tabelle T verglichen.

Falls keine Begrenzung der Zellenrate für eine Verbindung durchgeführt werden soll, werden entsprechende Steuerdaten unter Umgehung der Schedulereinrichtung S₁ über den Verbindungsabschnitt B der Schedulereinrichtung S₂ zugeführt. Dort werden die Steuerdaten einem an sich bekannten Schedulingalgorithmus unterworfen. In vorliegendem Ausführungsbeispiel soll dies das Weighted Fair Queueing Scheduling Verfahren sein, das bereits eingangs beschreiben wurde. Mit einem derartigen Algorithmus wird erreicht, daß im Sinne einer Garantie der Verbindungsparameter der Zellen während des Übertragungsvorganges eine untere Zellenrate garantiert wird.

Gemäß vorliegendem Ausführungsbeispiel werden für eine der Verbindungen, beispielsweise für die Verbindung mit der Nummer 8 (QID=8) eine Begrenzung der Zellenrate durchgeführt. In diesem Fall werden die Steuerdaten über den Verbindungsabschnitt A der Schedulereinrichtung S₁ zugeführt. Hier gelangt ein Algorithmus zum Ablauf, der eine obere Begrenzung der Zellenrate steuert. Dies erfolgt dadurch, daß eine hier implementierte Funktion die von der Eingangseinrichtung EE zugeführten Steuerdaten zusammen mit der Warteschlangenkennung QID so vorplant, daß die einzelnen Zellen eine vorgegebene Rate nicht überschreiten. Zu dem Zeitpunkt, an dem die Schedulereinrichtung S₁ eine Zelle auslesen würde, erzeugt sie jedoch ihrerseits ein Steuersignal zur Vorplanung des Auslesezeitpunktes entsprechend dem in der Schedulereinrichtung S₂ ablaufenden allgemeinen Scheduling Algorithmuses. Für dieselbe Warteschlangenkennung QID findet keine Vorplanung des nächsten Ereignisses in der Schedulereinrichtung S₁ statt. Auf Anstoß der Schedulereinrichtung S₁ plant somit die Schedulereinrichtung S₂ entsprechend dem hier ablaufenden Scheduling Algorithmus die Reihenfolge für die angezeigte Warteschlangenkennung QID. Die durch die Schedulereinrichtung S₁ vorgeplanten Zellen erfahren somit gegebenenfalls eine zusätzliche Verzögerung. Damit unterscheiden sich gegebenenfalls die in der Schedulereinrichtung S₁ eingestellte Spitzenbitrate von derjenigen, mit der die Zellen ausgelesen werden.

In vorliegendem Ausführungsbeispiel soll beispielhaft in der Schedulereinrichtung S₂ der Weighted Fair Queueing Scheduling Algorithmus zur Anwendung gelangen, wobei auch andere Algorithmen anwendbar sind. Das erfindungsgemäße Verfahren ist jedoch nicht auf die Verwendung eines bestimmten Algorithmus beschränkt.

Das Ergebnis der Bewertung des in der Schedulereinrichtung S₂ ablaufenden Algorithmus wird zu der Ausgangseinrichtung AE geleitet. Immer wenn die nächste Zelle aus einem Pufferspeicher P1...Pn mit einer bestimmten Warteschlangenkennung QID ausgelesen werden soll, wird dies der Ausgangseinrichtung AE angezeigt. Diese liest die erste Zelle mit der angezeigten Warteschlangenkennung QID aus dem in Frage kommenden Pufferspeicher P1...Pn aus und meldet dies zusammen mit der entsprechenden Warteschlangenkennung QID der Eingangseinrichtung EE. Hier wird daraufhin überprüft, ob noch eine weitere Zelle mit dieser QID im Pufferspeicher gespeichert ist. Ist dies der Fall, wird ein entsprechendes Signal (SCHEDULE QID) an die Schedulereinrichtung S₁ gesendet. Ist dies nicht der Fall, erfolgt keine weitere Aktion im Sinne einer Vorplanung (Auslesen) in der Schedulereinrichtung S₁ für diese Warteschlangenkennung QID.

Mit diesem Verfahren wird erreicht, daß ein Ereignis für eine Warteschlangenkennung QID nur in der Schedulereinrichtung S₁ oder S₂ aber nicht in beiden Einrichtungen gleichzeitig vorgeplant werden kann. Weiterhin sind beide Funktionsblöcke S₁ und S₂ nicht an eine bestimmte Implementierung gebunden. Damit wird von diesem zweistufigen Algorithmus bestimmt, in welcher Reihenfolge und zu welchem Zeitpunkt die in den Pufferspeichern P1...Pn gespeicherten Zellen ausgelesen werden sollen.

Weiterhin sei noch darauf hingewiesen, daß die Schedulereinrichtung S₁ lediglich einmal und die Schedulereinrichtung S₂ gegebenenfalls mehrmals vorgesehen sind. Da die erste Stufe des zweistufigen Verfahrens auf der Schedulereinrichtung S₁ abläuft, gelangt sie auch demzufolge lediglich einmal zum Ablauf. Die zweite Stufe des zweistufigen Verfahrens läuft auf der Schedulereinrichtung S₂ ab. Demzufolge kann beim Vorsehen mehrerer Schedulereinrichtungen S₂ die zweite Verfahrensstufe auf der jeweils zugeordneten Schedulereinrichtung S₂ - also mehrmals - zum Ablauf gelangen.

Abschließend sei noch angemerkt, daß vorstehendes Ausführungsbeispiel am Beispiel von ATM-Zellen beschrieben ist. Die Erfindung ist jedoch nicht allein darauf beschränkt. So kann das erfindungsgemäße Verfahren ebenfalls bei der Übertragung von Informationen in Datenpaketen als solchen zur Anwendung gelangen. Dabei muß aber dann dafür Sorge getragen werden, daß die Paketlänge den Steuerdaten mitgegeben wird.

## Patentansprüche

1. Verfahren zur Optimierung der Auslastung von Verbindungsabschnitten in Systemen, in denen Informationen in Datenpaketen übertragen werden, mit
einem auf einer Schedulereinrichtung (S₂) ablaufenden Schedulingverfahren, mit dem Verbindungsparameter, die für untere Übertragungsraten der Datenpakete repräsentativ sind, während des Übertragungsvorganges garantiert werden, und mit
einer Warteschlangenkennung (QID), die im Paketkopf abgelegt ist,
**dadurch gekennzeichnet,**
**daß** nach Maßgabe der Warteschlangenkennung (QID) gegebenenfalls dem auf der Schedulereinrichtung (S₂) ablaufenden Schedulingverfahren ein auf einer weiteren Schedulereinrichtung (S₁) ablaufendes weiteres Schedulingverfahren vorangestellt wird, mittels dem eine Begrenzung der Verbindungsparameter, die für obere Übertragungsraten der Datenpakete repräsentativ sind, während des Übertragunsvorgangs durchgeführt wird, wobei die Schedulereinrichtung (S₂) gegebenenfalls mehrmals und die weitere Schedulereinrichtung (S₁) lediglich einmal vorgesehen wird.

2. Verfahren nach Anspruch 1,
**dadurch gekennzeichnet,**
**daß** das Schedulingverfahren (S₂) ein Weighted Fair Queing Scheduling Algorithmus ist.

3. Verfahren einem der Ansprüche 1 bis 2,
**dadurch gekennzeichnet,**
**daß** in einer Eingangseinrichtung (EE) eine Tabelle (T) geführt wird, in der aktuelle Füllstände von Pufferspeichern (P1...Pn) enthalten sind.

4. Verfahren nach einem der vorstehenden Ansprüche,
**dadurch gekennzeichnet,**
**daß** nach Maßgabe von von der Schedulereinrichtung (S₂) erhaltenen Steuerdaten eine Ausgangseinrichtung (AE) Zellen wenigstens einem der Pufferspeicher (P1...Pn) entnimmt und diesen Vorgang der Eingangseinrichtung (EE) quittiert.

5. Verfahren nach einem der vorstehenden Ansprüche,
**dadurch gekennzeichnet,**
**daß** die Warteschlangenkennung (QID) während des Verbindungsaufbaus eingetragen wird.

6. Verfahren nach einem der vorstehenden Ansprüche,
**dadurch gekennzeichnet,**
**daß** die Datenpakete ATM - Zellen sind.

## Claims

1. Method for optimization of the utilization of connecting sections in systems in which information is transmitted in data packets, having
a scheduling method running on a scheduler device (S₂) by means of which connection parameters, which are representative of lower transmission rates of the data packets, are guaranteed during the transmission process, and having
a queue identifier (QID) which is stored in the packet header,
**characterized**
**in that**, based on a queue identifier (QID), the scheduling method running on the scheduler device (S₂) may possibly be preceded by a further scheduling method running on a further scheduler device (S₁), by means of which the connection parameters which are representative of upper transmission rates of data packets are limited during the transmission process, there possibly being more than one scheduler device (S₂) while there is only one further scheduler device (S₁).

2. Method according to Claim 1,
**characterized**
**in that** the scheduling method (S₂) is a weighted fair queueing scheduling algorithm.

3. Method according to Claim 1 or 2,
**characterized**
**in that** an input device (EE) contains a table (T) which contains the current filling levels of the buffer stores (P1...Pn).

4. Method according to one of the preceding claims,
**characterized**
**in that**, depending on the control data which are obtained from the scheduler device (S₂), an output device (AE) takes cells from at least one of the buffer stores (P1...Pn) and acknowledges this process to the input device (EE).

5. Method according to one of the preceding claims,
**characterized**
**in that** the queue identifier (QID) is entered while the connection is being set up.

6. Method according to one of the preceding claims,
**characterized**
**in that** the data packets are ATM cells.

## Revendications

1. Procédé d'optimisation de la charge de travail de segments de connexion dans des systèmes dans lesquels des informations sont transmises sous forme de paquets de données, avec
un procédé de programmation se déroulant sur un dispositif de programmation (S2), grâce auquel les paramètres de connexion représentatifs pour les taux de transmissions inférieurs des paquets de données sont garantis pendant l'opération de transmission et avec
une identification de file d'attente (QID) enregistrée dans la tête du paquet,
**caractérisé en ce que**,
suivant l'identification de file d'attente (QID), le procédé de programmation se déroulant sur le dispositif de programmation (S₂) est le cas échéant précédé par un autre procédé de programmation se déroulant sur un autre dispositif de programmation (S₁), au moyen duquel procédé une limitation des paramètres de connexion représentatifs pour les taux de transmission supérieurs des paquets de données est réalisée pendant l'opération de transmission, le dispositif de programmation (S₂) étant le cas échéant prévu plusieurs fois et l'autre dispositif de programmation (S₁) étant prévu seulement une fois.

2. Procédé selon la revendication 1,
**caractérisé en ce que**
le procédé de programmation (S2) est un algorithme Weighted Fair Queing Scheduling.

3. Procédé selon l'une des revendications 1 à 2,
**caractérisé en ce**
**qu'**un tableau (T) est établi dans un dispositif d'entrée (EE), ce tableau contenant les niveaux de remplissage actuels de mémoires tampons (P1 ... Pn).

4. Procédé selon l'une des revendications précédentes,
**caractérisé en ce que**,
suivant des données de commande reçues par le dispositif de programmation (S₂), un dispositif de sortie (AE) prélève des cellules d'au moins une mémoire tampon (P1 ... Pn) et accuse réception de cette opération au dispositif d'entrée (EE).

5. Procédé selon l'une des revendications précédentes,
**caractérisé en ce que**
l'identification de file d'attente (QID) est enregistrée pendant la réalisation de la connexion.

6. Procédé selon l'une des revendications précédentes,
**caractérisé en ce que**
les paquets de données sont des cellules MTA.
